# EUROPEAN PATENT SPECIFICATION

(11) **EP 4 356 356 B1**
(45) Date of publication and mention of the grant of the patent: **08.04.2026**
(21) Application number: 21946225.6
(22) Date of filing: 18.06.2021
(51) Int. Cl.: G06V 40/16, G06F 3/01

(54) **AUTOMATED CAPTURE OF NEUTRAL FACIAL EXPRESSION**
AUTOMATISIERTE ERFASSUNG VON NEUTRALEM GESICHTSAUSDRUCK
CAPTURE AUTOMATISÉE D'EXPRESSION FACIALE NEUTRE

(43) Date of publication of application: 24.04.2024
(73) Proprietor: Hewlett-Packard Development Company, L.P., Spring TX 77389 (US)
(72) Inventor: BALLAGAS, Rafael, Palo Alto, California 94304 (US); SIEGEL, Erika Hansen, Palo Alto, California 94304 (US); WEI, Jishang, Guilford, Connecticut 06437 (US); LI, Yang, Fort Collins, Colorado 80528 (US)
(74) Representative: Haseltine Lake Kempner LLP
(86) International application number: PCT/US2021/038082
(87) International publication number: WO 2022/265653

(56) References cited:
- WO-A1-2017/209777
- WO-A1-2019/228174
- KR-B1- 101 633 057
- US-A1- 2017 095 157
- US-A1- 2019 025 919
- US-A1- 2020 065 569
- MAVRIDOU I ET AL: "FACETEQ", 20170322; 1077952576 - 1077952576, 22 March 2017 (2017-03-22), pages 1 - 3, XP058410386, ISBN: 978-1-4503-4858-4, DOI: 10.1145/3110292.3110302
- COHN J. F. ET AL: "THE TIMING OF FACIAL MOTION IN POSED AND SPONTANEOUS SMILES", vol. 2, 1 April 2004 (2004-04-01), XP093240594, Retrieved from the Internet <URL:https://www.ri.cmu.edu/pub_files/pub4/cohn_jeffrey_2004_1/cohn_jeffrey_2004_1.pdf>

## Description

### BACKGROUND

Extended reality (XR) technologies include virtual reality (VR), augmented reality (AR), and mixed reality (MR) technologies, and quite literally extend the reality that users experience. XR technologies may employ head-mountable displays (HMDs). An HMD is a display device that can be worn on the head. In VR technologies, the HMD wearer is immersed in an entirely virtual world, whereas in AR technologies, the HMD wearer's direct or indirect view of the physical, real-world environment is augmented. In MR, or hybrid reality, technologies, the HMD wearer experiences the merging of real and virtual worlds. WO 2017/209777 A1 describes face tracking and facial animation using facial sensors within a head-mounted display. Mavridou I et al: "FACETEQ" (22 March 2017) describes a platform for measuring emotion in VR.

### BRIEF DESCRIPTION OF THE DRAWINGS

FIGs. 1A, 1B, and 1C are perspective, front, and block view diagrams, respectively, of an example head-mountable display (HMD) that can be used in an extended reality (XR) environment.
FIG. 2 is a diagram of an example non-transitory computer-readable data storage medium storing program code for calibrating HMD camera-based facial expression detection using an automatedly captured baseline neutral facial expression image responsive to facial electromyographic (fEMG) sensor-based neutral facial expression detection.
FIGs. 3A and 3B are diagrams of different example methods for detecting a neutral facial expression based on signals from one or multiple fEMG sensors.

### DETAILED DESCRIPTION

As noted in the background, a head-mountable display (HMD) can be employed as an extended reality (XR) technology to extend the reality experienced by the HMD's wearer. An HMD can include a small display panel in front of each eye of the wearer, as well as various sensors to detect or sense the wearer and/or the wearer's environment. Images on the display panels convincingly immerse the wearer within an XR environment, be it a virtual reality (VR), augmented reality (AR), a mixed reality (MR), or another type of XR.

An HMD can include one or multiple cameras, which are image-capturing devices that capture still or motion images. For example, one camera of an HMD may be employed to capture images of the wearer's lower face, including the mouth. Two other cameras of the HMD may be each be employed to capture images of a respective eye of the HMD wearer and a portion of the wearer's face surrounding the eye.

Based on such captured images, the wearer's facial expressions and correspondingly derived information, like facial cues and emotions, of the wearer can be assessed. Detecting facial features of the wearer of an HMD provides for even fuller immersion within an XR. For instance, the XR may suitably respond to the wearer's facial expressions, facial cues, and emotions, including changing any graphical representation of the wearer within the XR, such as an avatar, in correspondence with the changes in the wearer's actual facial expressions.

For accuracy, such HMD camera-based facial expression detection should be calibrated for the current wearer of the HMD before the wearer's facial expressions are actually detected based on images captured by the cameras. Calibration is performed based on an image of a neutral facial expression of the wearer of the HMD. That is, once a neutral facial expression image has been captured, subsequently captured images can be compared to the neutral facial expression image to identify the current facial expression of the wearer. The neutral facial expression image thus serves as a baseline image.

Capture of the neutral facial expression image is usually manually initiated with wearer involvement and interaction. After a user has mounted the HMD on his or her head, the user, who is now the wearer of the HMD, may be prompted to exhibit a neutral facial expression and provide an input once the wearer is exhibiting the neutral facial expression. Responsive to receiving the input, the HMD captures an image of the wearer's face, which is presumed to be an image of the wearer's neutral facial expression. HMD camera-based facial expression detection can then be calibrated based on the captured image.

However, such manual initiation of camera-based facial expression detection calibration can be cumbersome to the wearer. The wearer may ignore the prompting for capturing a neutral facial expression image, resulting in a less optimal XR experience. The wearer may exhibit a facial expression that he or she thinks is a neutral facial expression, but is actually a forced simulation of the wearer's actual neutral facial expression, which can deleteriously affect subsequent camera-based facial expression detection. At a minimum, manual initiation of camera-based facial expression detection calibration can be inconvenient to the HMD wearer, who may be eager to experience XR with a minimum of setup.

Techniques described herein provide for automated capture of a baseline neutral facial expression image of the wearer of an HMD, on which basis HMD camera-based detection of facial expressions of the wearer can be calibrated. The techniques leverage facial electromyographic (fEMG) sensors of the HMD. The fEMG sensors output signals that measure facial muscle activity by detecting and amplifying small electrical impulses that muscle fibers generate when they contract. Upon detection of a neutral facial expression based on such fEMG sensor signals, a baseline neutral facial image of the wearer is automatedly captured.

The HMD camera-based detection of the facial expressions of the wearer can thus be calibrated without the wearer of the HMD having to explicitly initiate calibration. That is, the wearer's neutral facial expression is detected and the baseline neutral facial expression image responsively automatedly captured without explicitly prompting the wearer to first exhibit a neutral facial expression. The wearer may indeed be unaware that such a baseline neutral facial expression has been captured. Such capture may occur within a short time period after the wearer first puts on the HMD, such as within the first few minutes of wearing the HMD, for instance.

The techniques described herein therefore leverage an HMD's fEMG sensors just for purposes of automated capture of a baseline neutral facial expression image that can be used for subsequent camera-based facial expression detection. The fEMG sensors are not used for detecting facial expressions of the wearer of the HMD beyond initial (e.g., one-time) detection of a neutral facial expression for purposes of calibrating camera-based facial expression detection. While fEMG sensors may be used for facial expression detection, in some cases such techniques may not be as accurate as camera-based detection and can be more computationally intensive and complicated than camera-based detection.

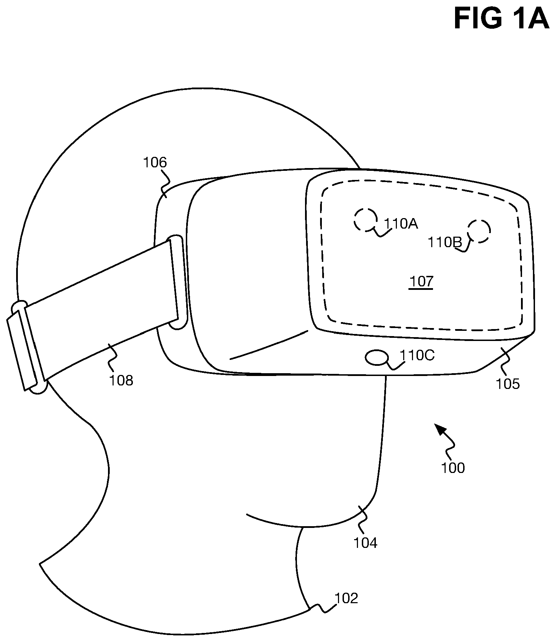

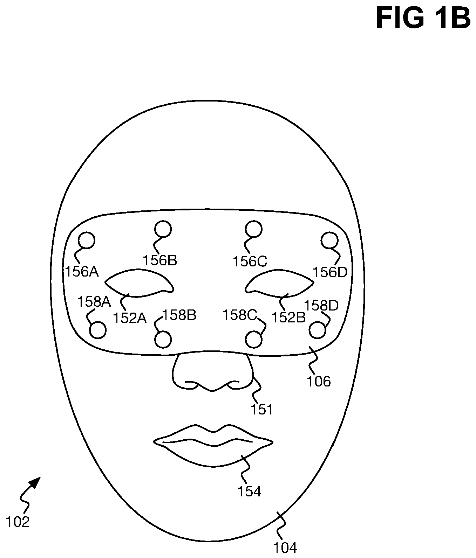

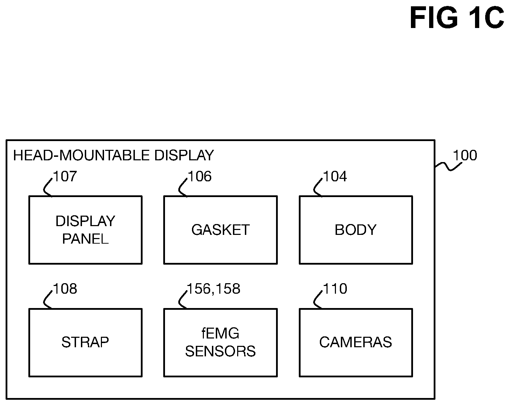

FIGs. 1A, 1B, and 1C show perspective, front, and block view diagrams of an example HMD 100 worn by a wearer 102 and positioned against the face 104 of the wearer 102. The HMD 100 includes a main body 105 having a gasket 106 at one end of the body 105 and that is positionable against the wearer 102's face 104 above the nose 151 and around the eyes 152A and 152B of the wearer 102 (per FIG. 1B), which are collectively referred to as the wearer 102's eyes 152. The gasket 106 may be fabricated from a soft flexible material, such as rubberized foam, that can deform in correspondence with contours of the wearer 102's face 104 to block ambient light from entering the interior of the main body 105 at the interface between the gasket 106 and the face 104 of the wearer 102. The gasket 106 further promotes wearer 102 comfort in usage of the HMD 100, since unlike the gasket 106 the main body 105 itself may be fabricated from a rigid material such as plastic and/or metal.

The HMD 100 can include a display panel 107 inside the other end of the main body 105 and that is positionable incident to the eyes 152 of the wearer 102. The display panel 107 may in actuality include a right display panel incident to and viewable by the wearer 102's right eye 152A, and a left display panel incident to and viewable by the wearer's 102 left eye 152B. By suitably displaying images on the display panel 107, the HMD 100 can immerse the wearer 102 within an XR.

The HMD 100 can include an adjustable strap 108 that can be tightened once the HMD 100 has been placed on the wearer 102, to maintain the gasket 106 fixably positioned against the wearer 102's face 104 in a hands-free manner. The depicted strap 108 is a behind-the-head strap. The HMD 100 may also include another strap, such as an over-the-head strap, to even more securely maintain positioning of the HMD 100 on the wearer 102.

The HMD 100 can include eye camera 110A and 110B and/or a mouth camera 110C, which are collectively referred to as the cameras 110. While just one mouth camera 110C is shown, there may be multiple mouth cameras 110C. Similarly, whereas just one eye camera 110A and one eye camera 110B are shown, there may be multiple eye cameras 110A and/or multiple eye cameras 110B. The cameras 110 capture images of different portions of the face 104 of the wearer 102 of the HMD 100, on which basis the facial expression of the wearer 102 can be detected.

The eye cameras 110A and 110B are inside the main body 105 of the HMD 100 and are directed towards respective eyes 152. The right eye camera 110A captures images of the facial portion including and around the wearer 102's right eye 152A, whereas the left eye camera 110B captures images of the facial portion including and around the wearer 102's left eye 152B. The mouth camera 110C is exposed at the outside of the body 105 of the HMD 100, and is directed towards the mouth 154 of the wearer 102 (per FIG. 1B) to capture images of a lower facial portion including and around the wearer 102's mouth 154.

The HMD 100 can include fEMG sensors 156A, 156B, 156C, and 156D, which are collectively referred to as the fEMG sensors 156, as well as fEMG sensors 158A, 158B, 158C, and 158D, which are collectively referred to as the fEMG sensors 158. The fEMG sensors 156 and 158 are disposed within the gasket 106 of the HMD 100. The fEMG sensors 156 and 158 are externally exposed at the gasket 106, so that the sensors 156 and 158 come into contact with the skin of the wearer 102's face 104 when the HMD 100 is worn by the wearer 102.

The fEMG sensors 156 are positioned above the wearer 102's eyes 152 and thus can be referred to as above-eye fEMG sensors 156, whereas the fEMG sensors 158 are positioned below the wearer 102's eyes 152 and thus can be referred to as below-eye fEMG sensors 158. In the depicted example there are four fEMG sensors 156 and four fEMG sensor 158, such that there are two fEMG sensors 156 and two sensors 158 around each eye 152 of the wearer 102. If less sensitivity is sufficient, there may be just one fEMG sensor 156 and one fEMG sensor 158 for each eye 152, in which case the sensors 156 and 158 for an eye 152 may be respectively centered above and below that eye 152. If even less sensitivity is sufficient, there may be just one fEMG sensor 156 and one fEMG sensor 158, in which case the sensors 156 and 158 may be respectively centered above and below in-between the eyes 152 of the wearer 102.

The fEMG sensors 156 and 158 output signals measuring facial muscle activity of the wearer 102 and can be used to detect a neutral facial expression of the wearer 102. The above-eye fEMG sensors 156 specifically output signals measuring muscle activity primarily in an upper facial portion above the wearer 102's eyes 152, whereas the below-eye fEMG sensors 158 output signals measuring muscle activity primarily in a lower facial portion below the wearer 102's eyes 152. The fEMG sensors 156 can therefore be employed to detect a neutral facial expression of the upper facial portion of the wearer 102 and the fEMG sensors 158 can be employed to detect a neutral facial expression of the lower facial portion of the wearer 102.

The fEMG sensors 156 and 158 may be able to respectively detect the neutral facial expression of the wearer's 102 upper and lower facial portions independently of one another. That is, the fEMG sensors 156 may be able to detect a neutral facial expression of the upper facial portion independent of the fEMG sensors 158 detecting a neutral facial expression of the lower facial portion, and vice-versa. Furthermore, if the neutral facial expression of just the upper or lower facial portion of the wearer 102 is of interest, then the HMD 100 may respectively include just the fEMG sensors 156 or 158. The HMD 100 may therefore similarly include just the eye cameras 110A and 110B or just the mouth camera 110C in this case.

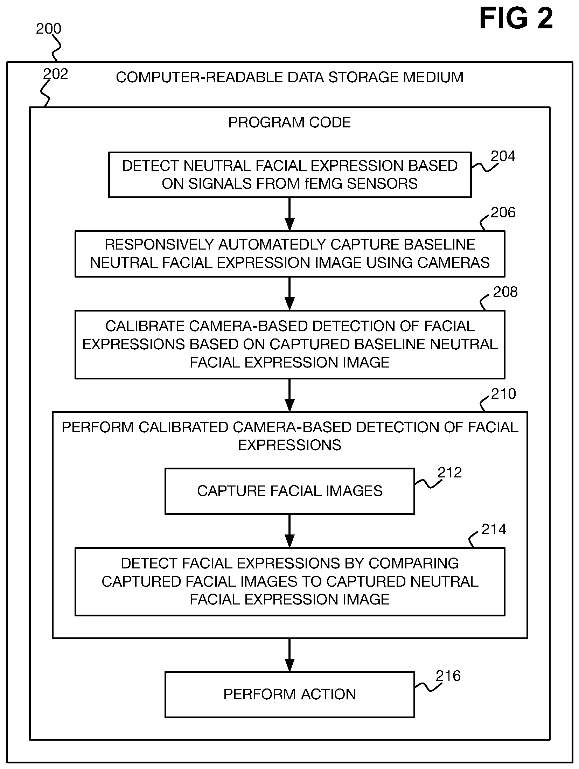

FIG. 2 shows an example non-transitory computer-readable data storage medium 200 storing program code 202 executable by a processor to perform processing. The processor may be part of the HMD 100, or may be part of a computing device to which the HMD 100 is communicatively connected in a wired or wireless manner. The processing that the processor performs via execution of the program code 202 stored on the computer-readable data storage medium 200 may be considered a method or process.

The processing includes detecting a neutral facial expression of the wearer 102 of the HMD 100 based on signals received from one or multiple fEMG sensors 156 and 158 of the HMD 100 (204). Two example ways in which a neutral facial expression can be detected based on signals from the fEMG sensors 156 and 158 are described later in the detailed description. Most generally, an overall neutral facial expression of the wearer 102 can be detected. However, as noted above, neutral facial expressions of the upper and lower facial portions may be independently detected (at different times even) and the neutral facial expression of just the upper or lower facial portion may be detected.

The processing includes responsively (i.e., in response to detection of the neutral facial expression by the fEMG sensors 156 and 158) automatedly capturing a baseline neutral facial expression image of the wearer 102 using the cameras 110 of the HMD 100 (206). The capture of the baseline neutral facial expression image is automated in that the wearer 102 does not have to explicitly initiate capture of the image, and the wearer 102 does not have to be explicitly prompted to exhibit a neutral facial expression. Rather, the baseline neutral facial expression is automatically captured once the fEMG sensors 156 and 158 detect that the wearer 102 is exhibiting a neutral facial expression image. As noted above, the wearer 102 may even be unaware that such image capture is taking place, particularly in the context of camera 110-based facial expression detection calibration.

The processing includes calibrating camera 110-based facial expression detection based on the captured baseline neutral facial expression image (208). In one implementation, calibration can include just storing the captured baseline neutral facial expression image for subsequent usage to detect facial expressions of the wearer 102 of the HMD 100 based on facial images of the wearer 102 captured by the cameras 110. In other implementations, to the extent that camera 110-based facial expression detection involves algorithms or models that have to parameters changed or that are otherwise adjusted for a given baseline neutral facial expression image, calibration can include changing such parameters or otherwise adjusting the algorithms or models on the basis of the captured image. As noted above, camera 110-based facial expression detection calibration can occur without the wearer 102 having to initiate the calibration and without the wearer 102 even having to be aware that the calibration is occurring.

The processing can then include (calibrated) camera 110-based detection of facial expressions of the wearer 102 of the HMD 100 (210). The upper and lower facial expressions of the wearer 102 may be independently detected, such as in a case in which neutral upper and lower facial expressions are captured in separate baseline images responsive to independent detection of the neutral facial expressions of the upper and lower facial portions of the wearer 102. Similarly, the detected facial expression can include just the upper facial expression using images from just the eye cameras 110A and 110B, such as if the HMD 100 does not include the mouth camera 110C. Likewise, the detected facial expression can include just the lower facial expression using images from just the mouth camera 110C, such as if the HMD 100 does not include the eye cameras 110A and 110B.

The facial expressions of the wearer 102 of the HMD 100 can be detected in a (calibrated) camera 110-based approach as follows. The cameras 110, subsequent to camera 110-based detection calibration, capture facial images of the wearer 102 (212). The changing facial expressions of the wearer 102 over time can then be detected by comparing these subsequently captured facial images to the previously captured neutral facial expression image (214). For example, a calibrated algorithm or a model may be applied to the subsequently captured facial images of the wearer 102. The baseline neutral facial expression image may also be input to the algorithm or model at the same time, particularly in the case if the algorithm or model was not previously adjusted based on the baseline neutral facial expression image.

The processing can include performing one or multiple actions related to the HMD 100 based on the facial expressions of the wearer 102 that have been detected (216). For instance, the emotions of the wearer 102 may be predicted based on the detected facial expressions. As another example, the images displayed by the HMD 100 on the display panel 107 for viewing by the wearer 102 of the HMD 100 may be changed based on the detected facial expressions of the wearer 102.

As a concrete example of the latter, a displayed avatar corresponding to the wearer 102 may have its facial expressions changed in correspondence with the changing actual facial expressions of the wearer 102 as detected. The avatar may additionally or instead be displayed to users other than the wearer 102, such as in the case in which the wearer 102 is participating in a video meeting or other collaboration with the other users. In this case, the action in question still is related to the HMD 100 insofar as the action pertains to the weather 102 of the HMD 100.

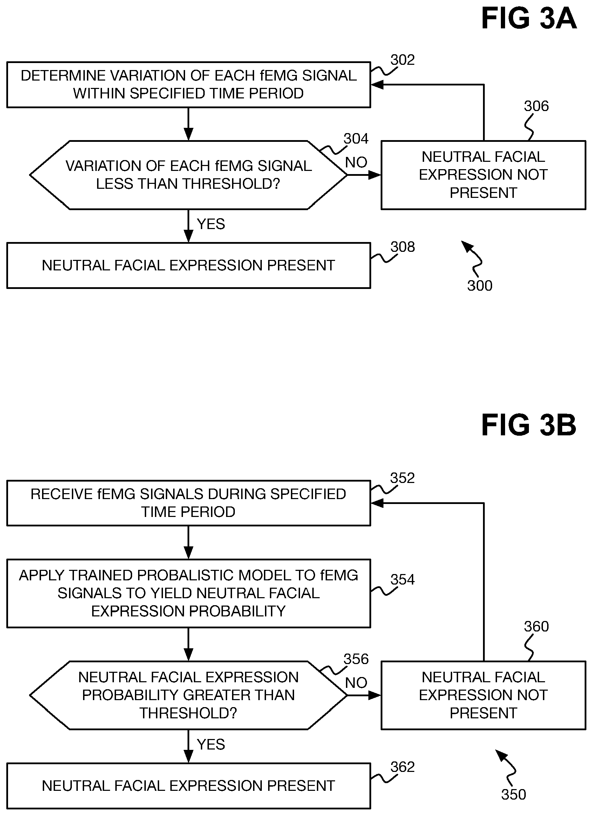

FIGs. 3A and 3B show different methods 300 and 350, respectively, for detecting the neutral facial expression of the wearer 102 of the HMD 100 based on signals captured from the fEMG sensors 156 and 158 of the HMD 100. Each method 300 and 350 can be used to implement part 204 of FIG. 2. Other methods may also be employed to detect a neutral facial expression of the wearer 102 to automatically trigger captured of a baseline neutral facial expression image by the cameras 110 of the HMD 100.

In FIG. 3A, the variation of each fEMG signal within a specified time period is determined (302). In general, when the wearer 102 is exhibiting a neutral facial expression, the facial muscles of the wearer 102 are in a relaxed state. Therefore, the signals received from the fEMG sensors 156 and 158 will minimally vary around baseline values that may be unique to the wearer 102. The actual values of the signals, and thus the baseline values of the signals, may not be of interest; rather, what is of interest is the variation of each signal. Therefore, if the variation of the signal from each fEMG sensor 156 and 158 is less than a threshold (304), then it is concluded that the wearer 102 is presently exhibiting a neutral facial expression (308). Otherwise, it is concluded that the wearer 102 is not presently exhibiting a neutral facial expression (306), and the method 300 is repeated with the next specified time period.

The time period in question may be several seconds in length or more. If the upper and lower facial expressions of the wearer 102 are to be independently detected, then the wearer 102's neutral facial expressions may likewise be independently detected. For example, the method 300 may be performed to detect a neutral upper facial expression of the wearer 102 based on just the signals from the above-eye sensors 156, and may be separately (e.g., concurrently) performed to a detect a neutral lower facial expression of the wearer 102 based on just the signals from the below-eye sensors 158.

In FIG. 3B, the signals received from the fEMG sensors 156 and 158 during a specified time period are received (352), and a previously trained probabilistic model applied to these fEMG signals to yield the probability that the wearer 102 is exhibiting a neutral facial expression (354). The probabilistic model may be a machine learning model, such as a supervised neutral network trained on facial images that have been labeled as to whether they represent neutral facial expressions. If the neutral facial expression probability is greater than a threshold (356), then it is concluded that the wearer 102 is presently exhibiting a neutral facial expression (362). Otherwise, it is concluded that the wearer 102 is not presently exhibiting a neutral facial expression (360), and the method 350 is repeated with the next specified time period.

As in the method 300, the time period in question may be several seconds in length or more in the method 350. Also as in the method 300, neutral upper and lower facial expressions of the wearer 102 may be able to be detected independently of one another. There may be a different trained probabilistic model for determining the probability of a neutral facial expression for each of the upper and lower facial portions of the wearer 102. In another implementation, the same trained probabilistic model may be used in each case.

Techniques have been described for automated capture of a baseline neutral facial expression image of the wearer of an HMD, on which basis HMD camera-based facial expression detection can be calibrated. Such automated capture is triggered by fEMG sensor-based detection of the wearer currently exhibiting a neutral facial expression. The wearer of the HMD therefore does not have to be explicitly prompted to exhibit a neutral facial expression, and does not have to manually initiate calibration of HMD camera-based facial expression detection.

## Claims

1. A non-transitory computer-readable data storage medium storing program code, which, when executed by a processor, causes the processor to perform processing comprising:
detecting a neutral facial expression of a wearer (102) of a head-mountable display, HMD, (100) based on signals received from one or multiple facial electromyographic, fEMG, sensors of the HMD (100);
responsively automatedly capturing a baseline neutral facial expression image of the wearer (102) using one or multiple cameras (110) of the HMD (100); and
calibrating HMD (100) camera-based detection of facial expressions of the wearer (102) based on the automatedly captured baseline neutral facial expression image.

2. The non-transitory computer-readable data storage medium of claim 1, wherein the processing further comprises:
subsequently performing the calibrated HMD (100) camera-based detection of the facial expressions of the wearer (102); and
performing actions related to the HMD (100) based on the facial expressions of the wearer (102) that have been detected.

3. The non-transitory computer-readable data storage medium of claim 2, wherein performing the actions related to the HMD (100) based on the facial expressions of the wearer (102) that have been detected comprises:
changing displayed images based on the facial expressions of the wearer (102) that have been detected.

4. The non-transitory computer-readable data storage medium of claim 1, wherein the processing further comprises:
subsequently capturing facial images of the wearer (102) using the cameras (110) of the HMD (100);
detecting the facial expressions of the wearer (102) by comparing the captured facial images of the wearer (102) to the automatedly captured baseline neutral facial expression image; and
performing actions related to the HMD (100) based on the facial expressions of the wearer (102) that have been detected.

5. The non-transitory computer-readable data storage medium of claim 4, wherein performing the actions related to the HMD (100) based on the facial expressions of the wearer (102) that have been detected comprises:
changing displayed images based on the facial expressions of the wearer (102) that have been detected.

6. The non-transitory computer-readable data storage medium of claim 1, wherein the neutral facial expression of the wearer (102) is detected and the baseline neutral facial expression image of the wearer (102) is responsively automated captured without explicitly prompting the wearer (102) to exhibit the neutral facial expression.

7. The non-transitory computer-readable data storage medium of claim 1, wherein the HMD (100) camera-based detection of the facial expressions of the wearer (102) is calibrated without the wearer (102) having to explicitly initiate calibration.

8. The non-transitory computer-readable data storage medium of claim 1, wherein the cameras (110) of the HMD (100) comprise one or multiple eye cameras (110a, 110b), and the fEMG sensors (156, 158) of the HMD (100) comprise one or multiple fEMG sensors (156, 158) positioned above eyes (152) of the wearer (102) of the HMD (100),
and wherein the detected neutral facial expression of the wearer (102) comprises a neutral expression of an upper facial portion of the wearer (102).

9. The non-transitory computer-readable data storage medium of claim 1, wherein the cameras (110) of the HMD (100) comprise one or multiple mouth cameras (110c), and the fEMG sensors (156, 158) of the HMD (100) comprise one or multiple fEMG sensors (156, 158) positioned below eyes (152) of the wearer (102) of the HMD (100),
and wherein the detected neutral facial expression of the wearer (102) comprises a neutral expression of a lower facial portion of the wearer (102).

10. The non-transitory computer-readable data storage medium of claim 1, wherein the cameras (110) of the HMD (100) comprise one or multiple eye cameras (110a, 110b) and one or multiple mouth cameras (110c), and the fEMG sensors (156, 158) of the HMD (100) comprise one or multiple fEMG sensors (156, 158) positioned above eyes (152) of the wearer (102) of the HMD (100) and one or multiple fEMG sensors (156, 158) positioned below the eyes (152) of the wearer (102),
and wherein the detected neutral facial expression of the wearer (102) comprises a neutral expression of a lower facial portion of the wearer (102) and a neutral expression of an upper facial portion of the wearer (102) that are independently detectable.

11. The non-transitory computer-readable data storage medium of claim 1, wherein detecting the neutral facial expression of the wearer (102) of the HMD (100) based on the signals received from the fEMG sensors (156, 158) of the HMD (100) comprises:
detecting that variation of each signal is less than a threshold variation within a specified time period, and
responsive to detecting that the variation of each signal is less than the threshold variation within the specified time period, concluding that the wearer (102) of the HMD (100) has the neutral facial expression.

12. The non-transitory computer-readable data storage medium of claim 1, wherein detecting the neutral facial expression of the wearer (102) of the HMD (100) based on the signals received from the fEMG sensors (156, 158) of the HMD (100) comprises:
applying a trained probabilistic model to the signals received from the fEMG signals of the HMD (100) to yield a probability that the wearer (102) of the HMD (100) is exhibiting the neutral facial expression; and
in response to the yielded probability being greater than a threshold, concluding that the wearer (102) of the HMD (100) has the neutral facial expression.

13. A head-mountable display, HMD, (100) comprising:
a display panel (107) positionable incident to eyes (152) of a wearer (102) of the HMD (100);
a gasket (106) positionable against a face (104) of the wearer (102) around the eyes (152) of the wearer (102);
one or multiple facial electromyographic, fEMG, sensors disposed in the gasket (106) to detect a neutral facial expression of the wearer (102); and
one or multiple cameras (110) to automatedly capture a baseline neutral facial expression image of the wearer (102) responsive to detection of the neutral facial expression by the fEMG sensors (156, 158) wherein the HMD is configured to calibrate camera-based detection of facial expressions of the wearer (102) on the basis of said baseline neutral facial expression image.

14. The HMD (100) of claim 13, wherein the cameras (110) comprise one or multiple eye cameras (110a, 110b), and the fEMG sensors (156, 158) of the HMD (100) comprise one or multiple fEMG sensors (156, 158) positioned above eyes (152) of the wearer (102) of the HMD (100),
and wherein the detected neutral facial expression of the wearer (102) comprises a neutral expression of an upper facial portion of the wearer (102).

15. The HMD (100) of claim 13, wherein the cameras (110) of the HMD (100) comprise one or multiple mouth cameras (110c), and the fEMG sensors (156, 158) of the HMD (100) comprise one or multiple fEMG sensors (156, 158) positioned below eyes (152) of the wearer (102) of the HMD (100),
and wherein the detected neutral facial expression of the wearer (102) comprises a neutral expression of a lower facial portion of the wearer (102).

## Patentansprüche

1. Nichtflüchtiges computerlesbares Datenspeichermedium, das Programmcode speichert, der, wenn er durch einen Prozessor ausgeführt wird, den Prozessor veranlasst, eine Verarbeitung durchzuführen, die umfasst:
Erkennen eines neutralen Gesichtsausdrucks eines Trägers (102) einer am Kopf befestigbaren Anzeige, HMD, (100) auf der Basis von Signalen, die von einem oder mehreren fazialen Elektromyographie-Sensor(en), fEMG-Sensor(en), der HMD (100) empfangen werden;
als Reaktion darauf, automatisiertes Erfassen eines Basisbildes eines neutralen Gesichtsausdrucks des Trägers (102) unter Verwendung einer oder mehrerer Kamera(s) (110) der HMD (100) und
Kalibrieren einer kamerabasierten Erkennung von Gesichtsausdrücken des Trägers (102) der HMD (100) auf der Basis des automatisch erfassten Basisbildes eines neutralen Gesichtsausdrucks.

2. Nichtflüchtiges computerlesbares Datenspeichermedium nach Anspruch 1, wobei die Verarbeitung ferner umfasst:
anschließendes Durchführen der kalibrierten kamerabasierten Erkennung der Gesichtsausdrücke des Trägers (102) der HMD (100) und
Durchführen von sich auf die HMD (100) beziehenden Aktionen auf der Basis der Gesichtsausdrücke des Trägers (102), die erkannt wurden.

3. Nichtflüchtiges computerlesbares Datenspeichermedium nach Anspruch 2, wobei das Durchführen der sich auf die HMD (100) beziehenden Aktionen auf der Basis der Gesichtsausdrücke des Trägers (102), die erkannt wurden, umfasst:
Ändern angezeigter Bilder auf der Basis der Gesichtsausdrücke des Trägers (102), die erkannt wurden.

4. Nichtflüchtiges computerlesbares Datenspeichermedium nach Anspruch 1, wobei die Verarbeitung ferner umfasst:
anschließendes Erfassen von Gesichtsbildern des Trägers (102) unter Verwendung der Kameras (110) der HMD (100);
Erkennen der Gesichtsausdrücke des Trägers (102) durch Vergleichen der erfassten Gesichtsbilder des Trägers (102) mit dem automatisch erfassten Basisbild eines neutralen Gesichtsausdrucks und
Durchführen von sich auf die HMD (100) beziehenden Aktionen auf der Basis der Gesichtsausdrücke des Trägers (102), die erkannt wurden.

5. Nichtflüchtiges computerlesbares Datenspeichermedium nach Anspruch 4, wobei das Durchführen der sich auf die HMD (100) beziehenden Aktionen auf der Basis der Gesichtsausdrücke des Trägers (102), die erkannt wurden, umfasst:
Ändern angezeigter Bilder auf der Basis der Gesichtsausdrücke des Trägers (102), die erkannt wurden.

6. Nichtflüchtiges computerlesbares Datenspeichermedium nach Anspruch 1, wobei der neutrale Gesichtsausdruck des Trägers (102) erkannt wird und das Basisbild eines neutralen Gesichtsausdrucks des Trägers (102) als Reaktion darauf automatisch erfasst wird, ohne den Träger (102) explizit dazu aufzufordern, den neutralen Gesichtsausdruck zu zeigen.

7. Nichtflüchtiges computerlesbares Datenspeichermedium nach Anspruch 1, wobei die kamerabasierte Erkennung der Gesichtsausdrücke des Trägers (102) der HMD (100) kalibriert wird, ohne dass der Träger (102) die Kalibrierung explizit initiieren muss.

8. Nichtflüchtiges computerlesbares Datenspeichermedium nach Anspruch 1, wobei die Kameras (110) der HMD (100) eine oder mehrere Augenkamera(s) (110a, 110b) umfassen und die fEMG-Sensoren (156, 158) der HMD (100) einen oder mehrere fEMG-Sensor(en) (156, 158) umfassen, der/die oberhalb der Augen (152) des Trägers (102) der HMD (100) positioniert ist/sind,
und wobei der erkannte neutrale Gesichtsausdruck des Trägers (102) einen neutralen Ausdruck eines oberen Gesichtsabschnitts des Trägers (102) umfasst.

9. Nichtflüchtiges computerlesbares Datenspeichermedium nach Anspruch 1, wobei die Kameras (110) der HMD (100) eine oder mehrere Mundkamera(s) (110c) umfassen und die fEMG-Sensoren (156, 158) der HMD (100) einen oder mehrere fEMG-Sensor(en) (156, 158) umfassen, der/die unterhalb der Augen (152) des Trägers (102) der HMD (100) positioniert ist/sind,
und wobei der erkannte neutrale Gesichtsausdruck des Trägers (102) einen neutralen Ausdruck eines unteren Gesichtsabschnitts des Trägers (102) umfasst.

10. Nichtflüchtiges computerlesbares Datenspeichermedium nach Anspruch 1, wobei die Kameras (110) der HMD (100) eine oder mehrere Augenkamera(s) (110a, 110b) und eine oder mehrere Mundkamera(s) (110c) umfassen und die fEMG-Sensoren (156, 158) der HMD (100) einen oder mehrere fEMG-Sensor(en) (156, 158), der/die oberhalb der Augen (152) des Trägers (102) der HMD (100) positioniert ist/sind, und einen oder mehrere fEMG-Sensor(en) (156, 158), der/die unterhalb der Augen (152) des Trägers (102) positioniert ist/sind, umfassen,
und wobei der erkannte neutrale Gesichtsausdruck des Trägers (102) einen neutralen Ausdruck eines unteren Gesichtsabschnitts des Trägers (102) und einen neutralen Ausdruck eines oberen Gesichtsabschnitts des Trägers (102), die unabhängig voneinander erkennbar sind, umfasst.

11. Nichtflüchtiges computerlesbares Datenspeichermedium nach Anspruch 1, wobei das Erkennen des neutralen Gesichtsausdrucks des Trägers (102) der HMD (100) auf der Basis der von den fEMG-Sensoren (156, 158) der HMD (100) empfangenen Signale umfasst:
Erkennen, dass eine Variation jedes Signals geringer ist als eine Schwellenwertvariation innerhalb einer spezifizierten Zeitspanne; und
als Reaktion auf das Erkennen, dass die Variation jedes Signals geringer ist als die Schwellenwertvariation innerhalb der spezifizierten Zeitspanne, Schlussfolgern, dass der Träger (102) der HMD (100) den neutralen Gesichtsausdruck aufweist.

12. Nichtflüchtiges computerlesbares Datenspeichermedium nach Anspruch 1, wobei das Erkennen des neutralen Gesichtsausdrucks des Trägers (102) der HMD (100) auf der Basis der von den fEMG-Sensoren (156, 158) der HMD (100) empfangenen Signale umfasst:
Anwenden eines trainierten probabilistischen Modells auf die von den fEMG-Signalen der HMD (100) empfangenen Signale, um eine Wahrscheinlichkeit zu erhalten, dass der Träger (102) der HMD (100) den neutralen Gesichtsausdruck zeigt; und
als Reaktion darauf, dass die erhaltene Wahrscheinlichkeit größer als ein Schwellenwert ist, Schlussfolgern, dass der Träger (102) der HMD (100) den neutralen Gesichtsausdruck aufweist.

13. Am Kopf befestigbare Anzeige, HMD, (100), die umfasst:
ein Anzeigefeld (107), das in Bezug auf Augen (152) eines Trägers (102) der HMD (100) positionierbar ist;
eine Abdichtung (106), die gegen ein Gesicht (104) des Trägers (102) um die Augen (152) des Trägers (102) herum positionierbar ist;
einen oder mehrere faziale(n) Elektromyographie-Sensor(en), fEMG-Sensor(en), der/die in der Abdichtung (106) angeordnet ist/sind, um einen neutralen Gesichtsausdruck des Trägers (102) zu erkennen; und
eine oder mehrere Kamera(s) (110) zum automatisierten Erfassen eines Basisbildes eines neutralen Gesichtsausdrucks des Trägers (102) als Reaktion auf die Erkennung des neutralen Gesichtsausdrucks durch die fEMG-Sensoren (156, 158), wobei die HMD dazu konfiguriert ist, eine kamerabasierte Erkennung von Gesichtsausdrücken des Trägers (102) auf der Basis des Basisbildes eines neutralen Gesichtsausdrucks zu kalibrieren.

14. HMD (100) nach Anspruch 13, wobei die Kameras (110) eine oder mehrere Augenkamera(s) (110a, 110b) umfassen und die fEMG-Sensoren (156, 158) der HMD (100) einen oder mehrere fEMG-Sensor(en) (156, 158) umfassen, der/die oberhalb der Augen (152) des Trägers (102) der HMD (100) positioniert ist/sind,
und wobei der erkannte neutrale Gesichtsausdruck des Trägers (102) einen neutralen Ausdruck eines oberen Gesichtsabschnitts des Trägers (102) umfasst.

15. HMD (100) nach Anspruch 13, wobei die Kameras (110) der HMD (100) eine oder mehrere Mundkamera(s) (110c) umfassen und die fEMG-Sensoren (156, 158) der HMD (100) einen oder mehrere fEMG-Sensor(en) (156, 158) umfassen, der/die unterhalb der Augen (152) des Trägers (102) der HMD (100) positioniert ist/sind,
und wobei der erkannte neutrale Gesichtsausdruck des Trägers (102) einen neutralen Ausdruck eines unteren Gesichtsabschnitts des Trägers (102) umfasst.

## Revendications

1. Support de stockage non transitoire lisible par ordinateur stockant un code de programme qui, lorsqu'il est exécuté par un processeur, amène le processeur à réaliser le traitement comprenant :
la détection d'une expression faciale neutre d'un porteur (102) d'un visiocasque, HMD, (100) sur la base de signaux reçus d'un ou de multiples capteurs électromyographiques faciaux, fEMG, du HMD (100) ;
la capture automatisée de manière réactive d'une image d'expression faciale neutre de base de référence du porteur (102) à l'aide d'une ou de multiples caméras (110) du HMD (100) ; et
l'étalonnage de la détection par caméra HMD (100) des expressions faciales du porteur (102) sur la base de l'image d'expression faciale neutre de base de référence capturée de manière automatisée.

2. Support de stockage de données non transitoire lisible par ordinateur selon la revendication 1, dans lequel le traitement comprend en outre :
la réalisation ultérieure de la détection basée sur une caméra HMD étalonnée (100) des expressions faciales du porteur (102) ; et
la réalisation d'actions liées au HMD (100) sur la base des expressions faciales du porteur (102) qui ont été détectées.

3. Support de stockage de données non transitoire lisible par ordinateur selon la revendication 2, dans lequel la réalisation des actions liées au HMD (100) sur la base des expressions faciales du porteur (102) qui ont été détectées comprend :
la modification d'images affichées sur la base des expressions faciales du porteur (102) qui ont été détectées.

4. Support de stockage de données non transitoire lisible par ordinateur selon la revendication 1, dans lequel le traitement comprend en outre :
la capture ultérieure d'images faciales du porteur (102) à l'aide des caméras (110) du HMD (100) ;
la détection des expressions faciales du porteur (102) en comparant les images faciales capturées du porteur (102) à l'image d'expression faciale neutre de base de référence capturée de manière automatisée ; et
la réalisation d'actions liées au HMD (100) sur la base des expressions faciales du porteur (102) qui ont été détectées.

5. Support de stockage de données non transitoire lisible par ordinateur selon la revendication 4, dans lequel la réalisation des actions liées au HMD (100) sur la base des expressions faciales du porteur (102) qui ont été détectées comprend :
la modification d'images affichées sur la base des expressions faciales du porteur (102) qui ont été détectées.

6. Support de stockage de données non transitoire lisible par ordinateur selon la revendication 1, dans lequel l'expression faciale neutre du porteur (102) est détectée et l'image d'expression faciale neutre de base de référence du porteur (102) est en réponse capturée de manière automatisée sans inviter explicitement le porteur (102) à présenter l'expression faciale neutre.

7. Support de stockage de données non transitoire lisible par ordinateur selon la revendication 1, dans lequel la détection basée sur une caméra HMD (100) des expressions faciales du porteur (102) est étalonnée sans que le porteur (102) ait à initier explicitement l'étalonnage.

8. Support de stockage de données non transitoire lisible par ordinateur selon la revendication 1, dans lequel les caméras (110) du HMD (100) comprennent une ou de multiples caméras oculaires (110a, 110b), et les capteurs fEMG (156, 158) du HMD (100) comprennent un ou de multiples capteurs fEMG (156, 158) positionnés au-dessus des yeux (152) du porteur (102) du HMD (100),
et dans lequel l'expression faciale neutre détectée du porteur (102) comprend une expression neutre d'une partie faciale supérieure du porteur (102).

9. Support de stockage de données non transitoire lisible par ordinateur selon la revendication 1, dans lequel les caméras (110) du HMD (100) comprennent une ou de multiples caméras buccales (110c), et les capteurs fEMG (156, 158) du HMD (100) comprennent un ou de multiples capteurs fEMG (156, 158) positionnés sous les yeux (152) du porteur (102) du HMD (100),
et dans lequel l'expression faciale neutre détectée du porteur (102) comprend une expression neutre d'une partie faciale inférieure du porteur (102).

10. Support de stockage de données non transitoire lisible par ordinateur selon la revendication 1, dans lequel les caméras (110) du HMD (100) comprennent une ou de multiples caméras oculaires (110a, 110b) et une ou de multiples caméras buccales (110c), et les capteurs fEMG (156, 158) du HMD (100) comprennent un ou de multiples capteurs fEMG (156, 158) positionnés au-dessus des yeux (152) du porteur (102) du HMD (100) et un ou de multiples capteurs fEMG (156, 158) positionnés sous les yeux (152) du porteur (102),
et dans lequel l'expression faciale neutre détectée du porteur (102) comprend une expression neutre d'une partie faciale inférieure du porteur (102) et une expression neutre d'une partie faciale supérieure du porteur (102) qui sont détectables indépendamment.

11. Support de stockage de données non transitoire lisible par ordinateur selon la revendication 1, dans lequel la détection de l'expression faciale neutre du porteur (102) du HMD (100) sur la base des signaux reçus depuis les capteurs fEMG (156, 158) du HMD (100) comprend :
la détection du fait que la variation de chaque signal est inférieure à une variation seuil dans un délai spécifié ; et
en réponse à la détection du fait que la variation de chaque signal est inférieure à la variation seuil dans le délai spécifié, la conclusion que le porteur (102) du HMD (100) a l'expression faciale neutre.

12. Support de stockage de données non transitoire lisible par ordinateur selon la revendication 1, dans lequel la détection de l'expression faciale neutre du porteur (102) du HMD (100) sur la base des signaux reçus depuis les capteurs fEMG (156, 158) du HMD (100) comprend :
l'application d'un modèle probabiliste entraîné aux signaux reçus depuis les signaux fEMG du HMD (100) afin de produire une probabilité que le porteur (102) du HMD (100) présente l'expression faciale neutre ; et
en réponse à la probabilité produite étant supérieure à un seuil, la conclusion que le porteur (102) du HMD (100) a l'expression faciale neutre.

13. Visiocasque, HMD, (100) comprenant :
un panneau d'affichage (107) pouvant être positionné incident aux yeux (152) d'un porteur (102) du HMD (100) ;
un joint (106) pouvant être positionné contre un visage (104) du porteur (102) autour des yeux (152) du porteur (102) ;
un ou de multiples capteurs électromyographiques faciaux, fEMG, disposés dans le joint (106) pour détecter une expression faciale neutre du porteur (102) ; et
une ou de multiples caméras (110) pour capturer de manière automatisée une image d'expression faciale neutre de base de référence du porteur (102) en réponse à la détection de l'expression faciale neutre par les capteurs fEMG (156, 158) dans lequel le HMD est configuré pour étalonner la détection, basée sur une caméra, des expressions faciales du porteur (102) sur la base de ladite image d'expression faciale neutre de base de référence.

14. HMD (100) selon la revendication 13, dans lequel les caméras (110) comprennent une ou de multiples caméras oculaires (110a, 110b), et les capteurs fEMG (156, 158) du HMD (100) comprennent un ou de multiples capteurs fEMG (156, 158) positionnés au-dessus des yeux (152) du porteur (102) du HMD (100),
et dans lequel l'expression faciale neutre détectée du porteur (102) comprend une expression neutre d'une partie faciale supérieure du porteur (102).

15. HMD (100) selon la revendication 13, dans lequel les caméras (110) du HMD (100) comprennent une ou de multiples caméras buccales (110c), et les capteurs fEMG (156, 158) du HMD (100) comprennent un ou de multiples capteurs fEMG (156, 158) positionnés sous les yeux (152) du porteur (102) du HMD (100),
et dans lequel l'expression faciale neutre détectée du porteur (102) comprend une expression neutre d'une partie faciale inférieure du porteur (102).
